# FASCICULE DE BREVET EUROPEEN

(11) **EP 2 809 503 B1**
(45) Date de publication et mention de la délivrance du brevet: **11.09.2019**
(21) Numéro de dépôt: 13707690.7
(22) Date de dépôt: 01.02.2013
(51) Int. Cl.: B29C 70/48, B29C 70/68, B29C 70/88, B29K 101/10, B29L 31/00

(54) **PROCEDE POUR LA FIXATION D'UN EQUIPEMENT SUR UNE STRUCTURE EN MATERIAU COMPOSITE**
VERFAHREN ZUR BEFESTIGUNG EINES AUSRÜSTUNGSTEILS AN EINER AUS EINEM VERBUNDMATERIAL HERGESTELLTEN STRUKTUR
METHOD FOR ATTACHING A PIECE OF EQUIPMENT TO A STRUCTURE MADE FROM COMPOSITE MATERIAL

(30) Priorité: 03.02.2012 US 201261594471 P
(43) Date de publication de la demande: 10.12.2014
(73) Titulaire: Safran Aircraft Engines, 75015 Paris (FR)
(72) Inventeur: MATHON, Richard, 91800 Brunoy (FR); PHELIPPEAU, Antoine, Portsmouth, New Hampshire 03801 (US)
(74) Mandataire: Boura, Olivier
(86) Numéro de dépôt international: PCT/FR2013/050210
(87) Numéro de publication internationale: WO 2013/114051

(56) Documents cités:
- US-A- 3 557 992
- US-A- 4 650 620
- US-A1- 2008 131 656
- US-A1- 2011 174 536
- US-B1- 7 560 060

## Description

### Arrière-plan de l'invention

La présente invention se rapporte au domaine général de la fixation d'équipements sur une structure en matériau composite.

L'un des domaines d'application de l'invention est celui des carters de soufflante en matériau composite de turbine à gaz pour moteurs aéronautiques sur lesquels sont montés différents équipements.

Dans un moteur aéronautique à turbine à gaz, un carter de soufflante remplit plusieurs fonctions. Il définit la veine d'entrée d'air dans le moteur, supporte un matériau abradable en regard du sommet des aubes de la soufflante, supporte une structure éventuelle d'absorption d'ondes sonores pour le traitement acoustique en entrée du moteur, et incorpore ou supporte un éventuel bouclier de rétention de débris.

Il est devenu courant de fabriquer un carter de soufflante en matériau composite, notamment par un procédé d'injection de résine sous vide (appelé également procédé RTM pour « Resin Transfer Molding). Selon cette technique de fabrication, une préforme fibreuse est enroulée en couches superposées sur un mandrin d'enroulement formant moule d'injection. Une fois le moule fermé, la résine thermodurcissable est injectée à l'intérieur du moule puis polymérisée. Le démoulage du carter de soufflante est effectué après refroidissement. On pourra se référer au document EP 1,961,923 qui décrit un exemple de réalisation d'un tel procédé.

Un carter de soufflante supporte également un certain nombre d'équipements, tels que par exemple des brides de maintien pour des canalisations et des supports d'accessoires (sondes, etc.). Ces équipements sont généralement montés contre l'une des faces du carter par l'intermédiaire de simples vis de fixation. Or, ce type d'assemblage présente une faiblesse importante due à la faible résistance à l'arrachement des filets réalisés dans le matériau composite pour le vissage des vis de fixation (notamment par rapport à un taraudage réalisé dans un matériau métallique). Le recours à des douilles vissées dans le carter de soufflante ne permet pas de résoudre ce problème puisque la mise en place de telles douilles nécessite également de tarauder les trous pratiqués dans le matériau composite

Selon le document US 2011/0174536 A1, dans la formation d'un composant en matériau composite renforcé par des fibres obtenu par un procédé d'infusion par transfert de résine de manière à obtenir une couche superficielle électriquement conductrice destinée à protéger de la foudre, le composant doit être percé et fraisé afin de recevoir un élément de fixation électriquement conducteur.

### Objet et résumé de l'invention

La présente invention a donc pour but principal de pallier de tels inconvénients en proposant un procédé de mise en place d'une platine de fixation sur une structure en matériau composite en vue de réaliser une fixation d'un équipement qui présente une forte résistance à l'arrachement.

Conformément à l'invention et selon la revendication 1, ce but est atteint grâce à un procédé de mise en place d'une platine de fixation sur une structure en matériau composite, la structure étant obtenue par un procédé d'injection de résine sous vide comprenant la mise en place d'une préforme fibreuse dans un moule fermé, l'injection d'une résine thermodurcissable à l'intérieur du moule et la polymérisation de la résine avant refroidissement, le procédé consistant à monter une platine de fixation métallique contre une paroi du moule préalablement à la mise en place de la préforme fibreuse, la platine de fixation venant en contact contre l'une des faces de la préforme fibreuse lors de la mise en place de celle-ci dans le moule et la résine venant se déposer entre la platine de fixation et la préforme fibreuse lors de l'injection de celle-ci dans le moule.

Avec un tel procédé, la localisation précise de la platine de fixation peut être assurée par son positionnement dans le moule. De plus, la fixation de la platine de fixation sur la structure en matériau composite est avantageusement réalisée par collage au moyen de la résine thermodurcissable injectée dans le moule. De la sorte, aucune étape de collage spécifique de la platine de fixation sur la structure en matériau composite n'est nécessaire, la résine injectée remplaçant la colle.

La platine de fixation peut être montée contre la paroi du moule au moyen d'une vis de maintien et d'une cale de serrage. Dans ce cas, la vis de maintien est de préférence retirée après l'étape de polymérisation et avant l'étape de refroidissement. Ainsi, tout risque de voir la platine de fixation rester solidaire du moule peut être écarté.

L'invention concerne également un procédé de fixation d'un équipement sur une structure en matériau composite, comprenant une étape de mise en place d'une platine de fixation métallique contre l'une des faces de la structure en matériau composite tel que défini précédemment, ladite platine de fixation présentant un trou taraudé, une étape de perçage de la structure en matériau composite d'un orifice lisse aligné avec le trou taraudé de la platine de fixation, une étape d'application de l'équipement à fixer contre la face de la structure en matériau composite opposée à celle sur laquelle est fixée la platine de fixation, et une étape de vissage de l'équipement à fixer sur la structure en matériau composite à l'aide d'un organe de vissage traversant la structure en matériau composite et vissée dans le trou taraudé de la platine de fixation.

Avec un tel procédé de fixation, la structure en matériau composite est prise en sandwich entre la platine de fixation d'un côté, et l'équipement à fixer de l'autre. Le vissage pour la fixation de cet équipement est ainsi effectué dans un trou taraudé qui est pratiqué dans un élément métallique, à savoir la platine de fixation. Il en résulte une bien meilleure résistance à l'arrachement qu'avec un vissage direct dans la structure en matériau composite.

De préférence, le trou taraudé de la platine de fixation est percé lors de l'étape de perçage de la structure en matériau composite. Par ailleurs, le trou taraudé de la platine de fixation peut être confondu avec un trou de passage d'une vis de maintien de la platine de fixation contre la paroi du moule.

L'invention concerne encore l'application du procédé tel que défini précédemment à la fixation d'un équipement sur un carter de soufflante en matériau composite de turbine à gaz pour moteur aéronautique.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente une étape du procédé de fixation conforme à l'invention appliqué à la fabrication d'un carter de soufflante par procédé RTM ;
- la figure 2 montre une autre étape du procédé de fixation illustré sur la figure 1 ;
- la figure 3 illustre le dispositif de fixation obtenu à l'issu du procédé des figures 1 et 2 ; et
- la figure 4 est une variante de réalisation du procédé de fixation conforme à l'invention.

### Description détaillée de l'invention

L'invention concerne la fixation d'un équipement sur une structure réalisée en matériau composite. Elle s'applique ainsi à toute pièce fabriquée en matériau composite et sur laquelle doit être fixée un équipement.

Un domaine d'application privilégié mais non exclusif de l'invention concerne la fixation d'un équipement sur un carter de soufflante en matériau composite de turbine à gaz pour moteur aéronautique.

Un carter de soufflante en matériau composite comprend un renfort fibreux (par exemple en carbone, verre, aramide ou céramique) densifié par une matrice en polymère (par exemple époxyde, bismaléimide ou polyimide). Le carter est généralement fabriqué par un procédé d'injection de résine sous vide (procédé RTM).

Comme connu en soi, le procédé RTM consiste à réaliser par tissage tridimensionnel une texture fibreuse sur un tambour d'appel. La texture fibreuse est ensuite enroulée en couches superposées sur un mandrin d'un moule d'injection dont le profil correspond à celui du carter à fabriquer. Le moule d'injection est fermé par application d'un contre-moule sur la préforme, et une résine thermodurcissable est injectée à basse pression à l'intérieur du moule. Après une étape de polymérisation, on obtient une ébauche fibreuse qui est refroidie avant d'être démoulée et usinée aux formes finales du carter désiré.

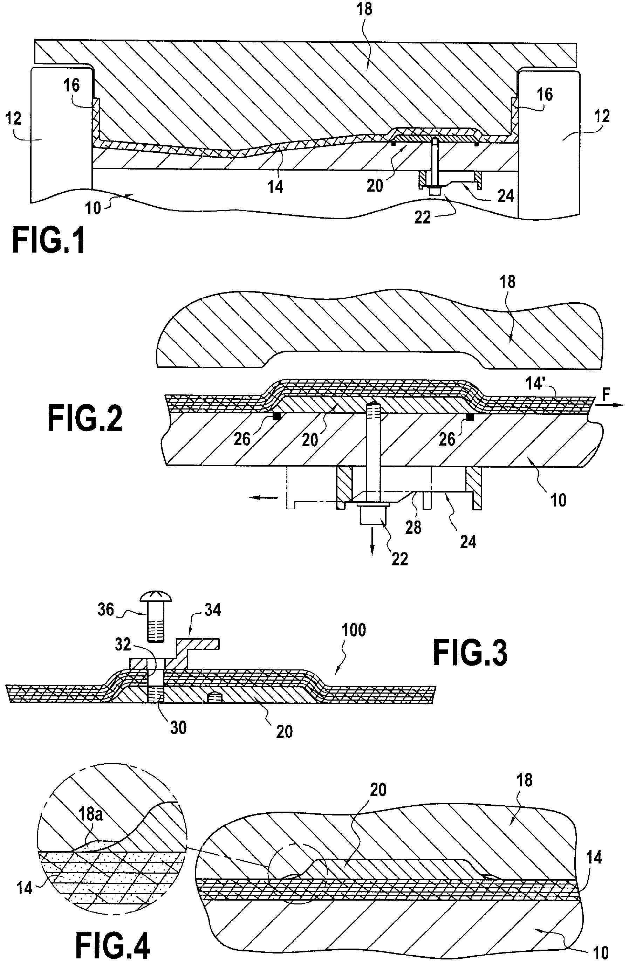

La figure 1 représente partiellement un mandrin 10 du moule d'injection utilisé au cours du procédé RTM succinctement décrit ci-dessus pour la fabrication d'un carter de soufflante en matériau composite. Le mandrin 10 présente une surface extérieure dont le profil correspond à celui du carter à fabriquer et deux flasques latéraux 12.

Une préforme fibreuse 14 a été enroulée sur ce mandrin en épousant le profil de celui-ci et les parties d'extrémité 16 se relèvent, en appui sur les flasques 12, pour former des parties de préformes correspondant à des brides du carter à fabriquer. La préforme fibreuse est maintenue ainsi en position par application d'un contre-moule 18.

Selon l'invention, il est prévu, préalablement à la mise en place de la préforme fibreuse 14 sur le mandrin 10, de monter une platine de fixation métallique 20 contre une paroi du moule, cette platine servant ultérieurement à assurer une fixation d'un équipement sur le carter après sa fabrication.

Plus précisément, sur l'exemple de réalisation des figures 1 et 2, la platine de fixation 20 est montée sur la surface extérieure du mandrin 10 préalablement à l'enroulement de la texture fibreuse sur celui-ci.

La platine de fixation 20 est réalisée en matériau métallique, par exemple en aluminium, en acier, etc. Elle est montée sur la surface extérieure du mandrin par l'intermédiaire d'une vis de maintien 22 traversant le mandrin par l'intérieur et d'une cale de serrage 24 destinée à assurer un blocage en position de platine de fixation ainsi montée.

Des joints d'étanchéité 26 sont positionnés sur le mandrin au regard de chaque extrémité longitudinale de la platine de fixation afin d'éviter tout infiltration de résine entre la surface extérieure du mandrin et la surface intérieure de la platine de fixation lors de l'étape d'injection de résine du procédé RTM.

Une fois la platine de fixation 20 montée sur la surface extérieure du mandrin, la texture fibreuse peut être enroulée en plusieurs couches superposées sur le mandrin.

Le moule d'injection fermé par le contre-moule 18, la résine thermodurcissable est alors injectée à basse pression. La résine vient notamment se déposer entre la surface extérieure de la platine de fixation 20 et la surface intérieure de la préforme fibreuse 14. L'étape de polymérisation va notamment conduire à durcir la résine déposée à cet endroit, celle-ci jouant alors le rôle de colle entre l'ébauche fibreuse obtenue suite à cette étape et la platine de fixation. Ainsi, la fixation de la platine de fixation sur l'ébauche fibreuse est assurée sans besoin d'utiliser une colle particulière.

La vis de maintien 22 de la platine de fixation 20 est de préférence retirée du moule d'injection avant l'étape de refroidissement du procédé RTM. A cet effet, une fois effectuée l'étape de polymérisation, et avant l'étape de refroidissement, l'opérateur dévisse d'un quart de tour la vis de maintien et déplace la cale de serrage 24 (à l'aide d'un maillet) de sorte à positionner la marche 28 de celle-ci au niveau de la vis de maintien (en pointillés sur la figure 2). La vis de maintien peut alors être complètement libérée.

Une fois effectuée l'étape de refroidissement du procédé RTM, le moule d'injection est ouvert (retrait du contre-moule 18 - voir figure 2) et l'ébauche fibreuse de carter 14' est démoulée, par exemple dans le sens de la flèche F sur la figure 2.

Après usinage de finition, on obtient le carter 100 en matériau composite désiré avec, sur la face intérieure de celui-ci, une platine de fixation métallique 20 qui est collée (figure 3). A l'aide d'un outil de perçage adéquat, un trou taraudé 30 est percé de part en part au travers de la platine de fixation, de même qu'un trou lisse 32 au travers du carter, ce trou lisse étant aligné avec le trou taraudé de la platine de fixation.

On notera que ce trou taraudé 30 de la platine de fixation peut être confondu avec le trou préalablement percé pour le passage de la vis de maintien 22 de la platine de fixation contre la paroi du moule.

Conformément au procédé de fixation selon l'invention, un équipement 34 peut alors être fixé sur le carter 100, du côté de sa face extérieure, en utilisant une vis de fixation 36 traversant de part en part le carter et vissé dans le trou taraudé 30 de la platine de fixation.

La figure 4 est une variante de réalisation montrant comment l'équipement peut être fixé sur la face intérieure du carter de soufflante.

Dans cette variante, la platine de fixation 20 doit être montée sur la face extérieure du carter. A cet effet, préalablement à la mise en place de la préforme fibreuse 14 sur le mandrin 10, la platine de fixation 20 est montée contre la surface intérieure du contre-moule 18, soit au moyen d'une vis de maintien traversant le contre-moule par l'extérieur (avec éventuellement l'aide d'une cale de serrage comme dans le cas des figures 1 et 2), soit au moyen d'une colle provisoire (comprenant par exemple un agent tackifiant).

Par ailleurs, une empreinte 18a pourra être créée dans le contre-moule autour de la platine de fixation. Lors de l'étape d'injection de la résine, cette empreinte permettra de former un bourrelet de résine pure autour de la platine de fixation afin de renforcer l'accrochage de celle-ci sur le carter.

Une fois la platine de fixation 20 montée sur la surface intérieure du contre-moule, la texture fibreuse peut être enroulée en plusieurs couches superposées sur le mandrin et le procédé RTM reprendre de la même manière que pour le précédent mode de réalisation.

## Revendications

1. Procédé de mise en place d'une platine de fixation sur une structure en matériau composite, la structure étant obtenue par un procédé d'injection de résine sous vide comprenant la mise en place d'une préforme fibreuse (14) dans un moule fermé, l'injection d'une résine thermodurcissable à l'intérieur du moule et la polymérisation de la résine avant refroidissement, le procédé consistant à monter une platine de fixation métallique (20) contre une paroi du moule préalablement à la mise en place de la préforme fibreuse, la platine de fixation venant en contact contre l'une des faces de la préforme fibreuse lors de la mise en place de celle-ci dans le moule et la résine venant se déposer entre la platine de fixation et la préforme fibreuse lors de l'injection de celle-ci dans le moule.

2. Procédé selon la revendication 1, dans lequel la platine de fixation est montée contre la paroi du moule au moyen d'une vis de maintien (22) et d'une cale de serrage (24).

3. Procédé selon la revendication 2, dans lequel la vis de maintien de la platine de fixation est retirée après la polymérisation de la résine et avant le refroidissement.

4. Procédé de fixation d'un équipement sur une structure en matériau composite, comprenant :
une étape de mise en place d'une platine de fixation métallique (20) contre l'une des faces de la structure (100) en matériau composite selon l'une quelconque des revendications 1 à 3, ladite platine de fixation présentant un trou taraudé (30) ;
une étape de perçage de la structure en matériau composite d'un orifice lisse (32) aligné avec le trou taraudé de la platine de fixation ;
une étape d'application de l'équipement à fixer (34) contre la face de la structure en matériau composite opposée à celle sur laquelle est fixée la platine de fixation ; et
une étape de vissage de l'équipement à fixer sur la structure en matériau composite à l'aide d'un organe de vissage (36) traversant la structure en matériau composite et vissée dans le trou taraudé de la platine de fixation.

5. Procédé selon la revendication 4, dans lequel le trou taraudé (30) de la platine de fixation (20) est percé lors de l'étape de perçage de la structure (100) en matériau composite.

6. Procédé selon l'une des revendications 4 et 5, dans lequel le trou taraudé (30) de la platine de fixation (20) est confondu avec un trou de passage d'une vis de maintien (22) de la platine de fixation contre la paroi du moule.

7. Application du procédé selon l'une quelconque des revendications 4 à 6 à la fixation d'un équipement sur un carter de soufflante en matériau composite de turbine à gaz pour moteur aéronautique.

## Patentansprüche

1. Verfahren zum Anbringen einer Befestigungsplatte an einer Struktur aus Verbundwerkstoff, wobei die Struktur durch ein Vakuum-Harzinjektionsverfahren erhalten wird, das das Anordnen eines Faservorformlings (14) in einer geschlossenen Form, das Einspritzen eines in Wärme aushärtenden Harzes in den Innenraum der Form und das Polymerisieren des Harzes vor dem Abkühlen umfasst, wobei das Verfahren darin besteht, eine Metallbefestigungsplatte (20) an einer Wand der Form vor dem Anordnen des Faservorformlings anzubringen, wobei die Befestigungsplatte während des Anordnens des Faservorformlings in der Form an einer seiner Seiten in Kontakt gelangt und sich das Harz während seines Einspritzens in die Form zwischen der Befestigungsplatte und dem Faservorformling ablagert.

2. Verfahren nach Anspruch 1, bei dem die Befestigungsplatte an der Wand der Form mittels einer Halteschraube (22) und eines Klemmkeils (24) angebracht wird.

3. Verfahren nach Anspruch 2, bei dem die Halteschraube der Befestigungsplatte nach dem Polymerisieren des Harzes und vor dem Abkühlen entfernt wird.

4. Verfahren zur Befestigung einer Ausrüstung an einer Struktur aus Verbundwerkstoff, umfassend:
einen Schritt zum Anbringen einer Metallbefestigungsplatte (20) an einer der Seiten der Struktur (100) aus Verbundwerkstoff nach einem der Ansprüche 1 bis 3, wobei die Befestigungsplatte eine Gewindebohrung (30) aufweist,
einen Schritt zum Bohren einer glatten Öffnung (32), die mit der Gewindebohrung der Befestigungsplatte fluchtet, in die Verbundwerkstoffstruktur,
einen Schritt zum Anlegen der zu befestigenden Ausrüstung (34) an der Seite der Verbundwerkstoffstruktur, die derjenigen gegenüberliegt, an der die Befestigungsplatte befestigt ist, und
einen Schritt zum Anschrauben der zu befestigenden Ausrüstung an der Verbundwerkstoffstruktur mit Hilfe eines Schrauborgans (36), das die Verbundwerkstoffstruktur durchgreift und in die Gewindebohrung der Befestigungsplatte geschraubt wird.

5. Verfahren nach Anspruch 4, bei dem die Gewindebohrung (30) der Befestigungsplatte (20) während des Schrittes des Bohrens der Struktur (100) aus Verbundwerkstoff gebohrt wird.

6. Verfahren nach einem der Ansprüche 4 und 5, bei dem die Gewindebohrung (30) der Befestigungsplatte (20) mit einer Durchgangsbohrung einer Schraube zum Halten (22) der Befestigungsplatte an der Wand der Form zusammenfällt.

7. Anwendung des Verfahrens nach einem der Ansprüche 4 bis 6 auf die Befestigung einer Ausrüstung an einem Gebläsegehäuse aus Verbundwerkstoff einer Gasturbine für ein Flugzeugtriebwerk.

## Claims

1. A method of placing a fastener plate on a structure made of composite material, the structure being obtained by a technique of injecting resin under a vacuum, the technique comprising placing a fiber preform (14) in a closed mold, injecting a thermosetting resin into the mold, and polymerizing the resin prior to cooling, the method consisting in mounting a metal fastener plate (20) against a wall of the mold before putting the fiber preform into place, the fastener plate coming into contact with one of the faces of the fiber preform while it is being put into place in the mold, and the resin becoming deposited between the fastener plate and the fiber preform while it is being injected into the mold.

2. A method according to claim 1, wherein the fastener plate is mounted against the wall of the mold by means of a holding screw (22) and a clamping wedge (24).

3. A method according to claim 2, wherein the screw holding the fastener plate is withdrawn after the resin has polymerized and before it has cooled.

4. A method of fastening equipment on a structure made of composite material, the method comprising:
• a step of placing a metal fastener plate (20) against one of the faces of the composite material structure (100) according to any one of claims 1 to 3, said fastener plate presenting a tapped hole (30);
• a step of forming a smooth orifice (32) in the composite material structure in alignment with the tapped hole in the fastener plate;
• a step of applying the equipment for fastening (34) against the face of the composite material structure opposite from the face on which the fastener plate is fastened; and
• a step of fastening the equipment for fastening on the composite material structure by screwing a screw member (36) through the composite material structure and into the tapped hole in the fastener plate.

5. A method according to claim 4, wherein the tapped hole (30) in the fastener plate (20) is formed during the step of drilling the composite material structure (100).

6. A method according to claim 4 or claim 5, wherein the tapped hole (30) of the fastener plate (20) is the same as a hole for passing a holding screw (22) of the fastener plate against the wall of the mold.

7. The use of the method according to any one of claims 4 to 6 in fastening equipment on a composite material fan casing of a gas turbine for an aeroengine.
